(19) Europäisches Patentamt
European Patent Office
Office européen des brevets

(11) **EP 1 219 760 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**21.12.2011 Patentblatt 2011/51**

(45) Hinweis auf die Patenterteilung:
**14.07.2004 Patentblatt 2004/29**

(21) Anmeldenummer: **01117926.4**

(22) Anmeldetag: **24.07.2001**

(51) Int Cl.:
*E04F 13/00* (2006.01)    *E04F 15/02* (2006.01)
*E04F 15/20* (2006.01)    *B32B 27/32* (2006.01)
*B32B 27/30* (2006.01)

(54) **Schallschutz-Verbundsystem für Raumbegrenzungsflächen**

Composite soundproofing system for room-limiting surfaces

Système d'isolant acoustique mixte pour les surfaces délimitant des espaces

(84) Benannte Vertragsstaaten:
**AT BE CH CY DE DK ES FI FR GB GR IE IT LI LU MC NL PT SE TR**

(30) Priorität: **29.12.2000 EP 00128689**

(43) Veröffentlichungstag der Anmeldung:
**03.07.2002 Patentblatt 2002/27**

(73) Patentinhaber: **Trocellen GmbH**
**53840 Troisdorf (DE)**

(72) Erfinder: **Elsässer, Manfred**
**6082 Patsch (AT)**

(74) Vertreter: **Wübken, Ludger**
**Trocellen GmbH**
**Patentabteilung Geb. 56**
**Mülheimer Strasse 26**
**53840 Troisdorf (DE)**

(56) Entgegenhaltungen:
**EP-A- 0 653 527     CH-A- 645 968**
**DE-A- 2 841 208     US-A- 4 803 112**
**US-A- 5 584 130**

• **DIN-EN ISO 6721-3: 1996**
• **DIN-EN ISO 6721-1: 1996**

EP 1 219 760 B2

**Beschreibung**

Aus der Bauphysik ist bekannt, dass sich im Bauwesen ausreichender Trittschallschutz von Trennbauteilen bei gleichzeitig realistischen Bauteilmassen nur durch mehrschalige - in der Regel zweischalige - Bauteile oder durch die Kombination schwerer einschaliger Trenndecken mit weichfedernden Gehbelägen erreichen lassen. Zweischalige Trenndecken sind im allgemeinen in Form von schwimmenden Estrichen ausgeführt und bedingen daher in der Regel relativ grosse Konstruktionshöhen, die insbesondere in der Altbausanierung mit meist vorgegebenen Anschlusshöhen praktisch kaum realisierbar sind. Bei der Berechnung des für den Mindest-Trittschallschutz des Gesamtaufbaus erforderlichen Trittschall-Verbesserungsmasses $VM_{erf}$ mehrschichtiger Deckenauflagen dürfen weichfedernde Gehbeläge nicht in allen europäischen Ländern herangezogen werden. Sie sind ausserdem teilweise für den Einsatz insbesondere in Nassbereichen (Bädern) ungeeignet oder nicht akzeptabel.

In letzter Zeit kommen hingegen immer mehr relativ dünne, steife Bodenbelage und Wandverkleidungen zum Einsatz, z.B. aus Holz- bzw. Press-Spanplatten in Dielenformaten mit extrem harten Oberflächen, z.B. auch aus Kunststoff-Laminaten. Das Verhalten dieser - einschalig wirkenden - Boden- bzw. Wandbeläge ist in besonderem Masse hinsichtlich der Schallabstrahlung in den begangenen Raum selbst kritisch und subjektiv unangenehm.

Bodendielen, die unmittelbar auf einer Rohdecke aufgeklebt werden, bieten zwar hinsichtlich der Schallabstrahlung in den Raum die günstigsten Voraussetzungen, tragen damit aber zur Trittschalldämmung kaum etwas bei, so dass ihre Verlegung in der Baupraxis (zumindest in den DACH-Ländern Deutschland, Österreich und Schweiz) auf schwimmenden Estrichen erforderlich ist.

Es ist bekannt, dass in Verbindung mit "schwimmenden" Estrichen eine gute Trittschalldämmung und damit guter Trittschallschutz dann zu erzielen ist, wenn Schalldämmschichten mit einer dynamischen Steifigkeit von unter 30 MN/m³ eingesetzt werden (vgl. hierzu z.B. "Schall·Wärme·Feuchte, Grundlagen, Erfahrungen und praktische Hinweise für den Hochbau", von K. Gösele/W. Schüle, 9. Auflage, Bauverlag GmbH, Wiesbaden und Berlin, 1991, Punkt 5.5.2 Fußböden, Seiten 97-101).

Wesentlich ist, dass nach gültiger Fachmeinung die Verbesserung der Luft- und Trittschalldämmung um so höher ist, je geringer die dynamische Steifigkeit s' der Schalldämmschicht und je grösser die flächenbezogene Masse m' der lastverteilenden Platte ist. Bei einer flächenbezogenen Masse der lastverteilenden Platte von 50 kg/m² beispielsweise darf die dynamische Steifigkeit der Schalldämmschicht zur ausreichenden Verbesserung der Luftschalldämmung von Decken in Wohngebauden u.ä. je nach Rohdecke maximal 30 bis 50 MN/m³ betragen. Damit wird gleichzeitig auch die erforderliche Verbesserung der Trittschalldämmung erzielt (vgl. hierzu "Schallschutz + Raumakustik in der Praxis" von W. Fasold/ E. Veres, Verlag für Bauwesen, Berlin, Ausgabe 1998, Seiten 306-307).

Der gleichen Quelle ist auch zu entnehmen, dass bei lastverteilenden Platten aus Gussasphalt- und Trockenestrichen zur Erzielung bewerteter Trittschallminderungen von $\Delta L_w$ um 20 dB bei flächenbezogenen Massen m' zwischen lediglich 15 und 60 kg/m² die Werte der dynamischen Steifigkeiten s' der Dämmstoffe nur mehr zwischen 18 und 50 MN/m³ liegen dürfen. Da die dynamische Steifigkeit gemäss

$$(1) \qquad s' = \frac{E}{d}$$

eine Funktion von Elastizitätsmodul E des Materials und Dicke d der betrachteten Materialschicht ist, sind solche Materialsteifigkeiten mit marktüblichen Dämmstoffen, von wenigen Ausnahmen abgesehen, aber nur bei genügender, eher grosser Dicke zu erzielen.

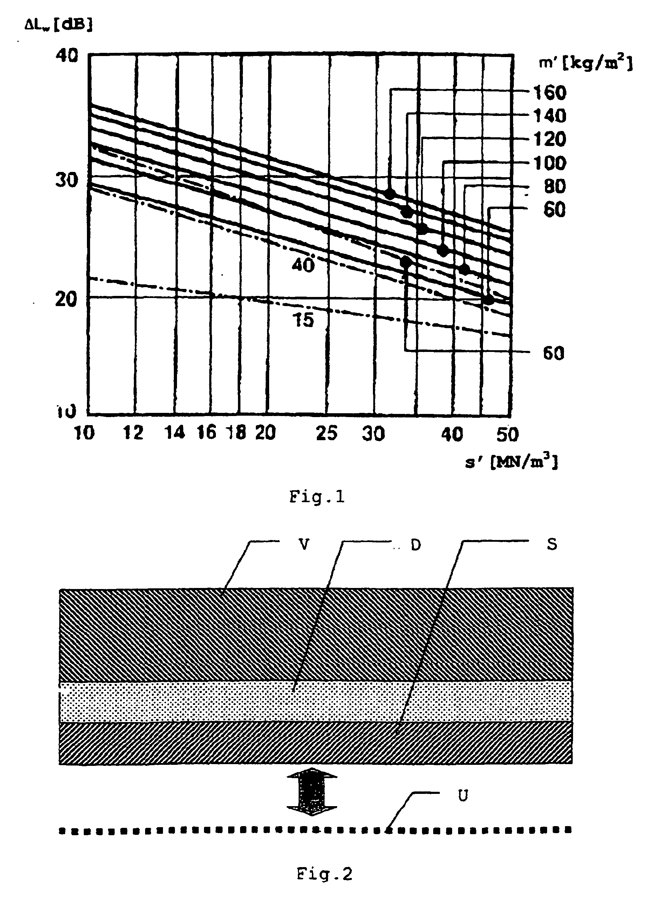

Lastverteilende Dielenböden weisen weit niedrigere flächenbezogene Massen auf als die erwähnten schwimmenden Estriche. Bei unmittelbarer Verlegung auf geeigneten Schalldämmschichten über der Rohdecke wären nach der noch immer herrschenden Lehre, die sich z.B. sowohl in der gültigen einschlägigen Norm ÖNORM B 8115 (vgl. Fig. 1 ), ÖNORM B 8115-4, Ausgabe 1992, Tabelle 12, als auch in der laufenden Neubearbeitung dieser Norm (Vorschlag ÖNORM B 8115-4, Fassung vom 2. Mai 2001, Tabelle 16) inhaltlich völlig identisch wiederspiegelt, also zur Erreichung einer entsprechenden bewerteten Trittschallminderung dynamische Steifigkeiten s' vollflächig verlegter Dämmstoffe von kleiner oder höchstens 10 MN/m³ zu fordern.

Kombinationen des Stands der Technik aus meist mehreren Schichten zur Verwendung unter oder in Verbindung mit Verkleidungen oder Bodenbelägen werden beispielsweise in den Dokumenten EP 0 653 527 A, DE 197 22 513, DE 298 09 767 U, CH 645 150, EP 1 001 111, EP 0 864 712 oder DE 196 37 142 geoffenbart.

Aus der europäischen Patentanmeldung Nr. 00128689.7 (= EP 1 113 122 A) ist ein Schallschutzverbundsystem bekannt, das durch die Kombination einer dünnen, relativ leichten Lastverteilungsplatte mit einer Schall-Dampfungsschicht sowie mit einer speziell dimensionierten Schalldämmschicht, insbesondere einer Luftnoppenfolie, die Vorteile zweischaliger Konstruktionen auch für Fussbodenaufbauten mit verhältnismässig geringen Flächenmassen der Einzelschichten ermöglicht und das hiermit als geoffenbart betrachtet wird. Als nachteilig erweist sich die Begrenzung der dynamischen Steifigkeit dieser Schalldämmschicht auf höchstens 20 MN/m³, vorzugsweise höchstens 10 MN/m³.

In der deutschen Gebrauchsmusteranmeldung Nr. 201 09 885.7 wird eine Luftnoppenfolie aus Folienbahnen mit Barrierewerkstoffen beschrieben, die aufgrund ihrer hohen punktuellen Belastbarkeit und ihrer Gasdichtigkeit auch im Dauergebrauch eine Verwendungsmöglichkeit für den Baubereich besitzt.

Ein Dämpfungssystem zur Vibrationsdämpfung und zur Verringerung akustischer Abstrahlungen in Fahr- oder Flugzeugen und in Schiffen ist beispielsweise aus der Patentschrift US 4,860,851 bekannt. Das System besteht aus einer oder mehreren Schichten aus deformierbarem Material, das entstehende Vibrationen aufnehmen und dissipativ abbauen soll. Auf der einer Vibrationsursache gegenüberliegenden Seite befindet sich eine harte, wenig kompressible Schicht oder im Schiffbau auch Wasser als inkompressible Flüssigkeit, welche die Vibrationen möglichst auf die dämpfende Struktur beschränkt. Der Abbau der mechanischen Schwingungen erfolgt innerhalb der einen oder mehreren Schichten durch Wahl geeigneter Werte der Verlustfaktoren. Dämpfungssysteme diesen Typs sind aufgrund unterschiedlicher Aufgabenstellungen als Schallschutzsysteme für Raumbegrenzungsflächen im Baubereich wenig geeignet, da hier ein vergleichbarer, vollständig umhüllender Einschluss des Schallerzeugers, z.B. eines Schuhabsatzes, mit dämpfenden und dämmenden Schichten nicht möglich ist.

Schallschutzsysteme für Raumbegrenzungsflächen des Standes der Technik besitzen somit den Nachteil, dass für eine Verringerung von Abstrahlung in den Raum und eine entsprechend bewertete Trittschallminderung grössere Schichtdicken in Kauf genommen werden müssen oder aber nur geringere Trittschallminderungen erreicht werden können.

Die Realisierung eines Schallschutzsystems, das eine geringe Dicke und dennoch eine gute Trittschalldämmung besitzt, zur Verwendung unter steifen Bodenbelägen und Deckenverkleidungen stellt ein lang bestehendes Bedürfnis dar. Aufgrund der bisher herrschenden Fachmeinung waren Schalldämmschichten mit hohen dynamischen Steifigkeiten für diesen Zweck nicht oder nur sehr begrenzt verwendbar.

Die Erfindung hat sich daher die Aufgabe gestellt, ein Schallschutz-Verbundsystem zu schaffen, das sowohl die Abstrahlung in den Raum verringert als auch den Trittschallschutz verbessert, und zwar insbesondere bei dünnen, harten Gehbelägen bzw. Wand- oder Deckenverkleidungen. Hierbei soll aufgrund der geforderten Verwendbarkeit unter Verkleidungen die Gesamtdicke des Schallschutzverbundsystems begrenzt bleiben.

Diese Aufgabe wird durch die Kombination der in Anspruch 1 gegebenen Merkmale gelöst. Weiterentwicklungen und Verbesserungen des Erfindungsgedankens sind in den Kennzeichen der abhängigen Ansprüche wiedergegeben. Wenn in der vorliegenden Anmeldung von Trittschallschutz die Rede ist, dann ist damit im Falle von Wand- oder Deckenverkleidungen sinngemäss auch immer der Schallschutz schlechthin zu verstehen.

Der Erfindung liegt der Gedanke zugrunde, durch eine geeignete und spezifische Kombination von Biegeverlustfaktor tan $\delta_f$ und einachsigem Dehnverlustfaktor tan $\delta_c$ in den Schichten eines Schallschutzverbundsystems überraschenderweise auch dynamische Steifigkeiten jenseits des Wertes von 50 MN/m$^3$ und damit geringere Schichtdicken zu ermöglichen, als dies bisher aus dem Stand der Technik bekannt war.

Diese beiden für die Beschreibung des mindestens zweilagigen Schallschutz-Verbundsystems verwendeten Parameter, die als Verlustfaktoren das dissipative Verhalten des Systems charakterisieren, sind

- der Biegeverlustfaktor tan $\delta_f$ der unmittelbar unterhalb der Bodendiele angeordneten Dämpfungsschicht für die durch das Begehen entstehenden Biegeschwingungen der Bodendielen (wobei Dickenschwingungen des Systems "Diele + Dämpfungsschicht" allein praktisch ohne Bedeutung sind) und

- der einachsige Dehnverlustfaktor tan $\delta_c$ der unter der Dämpfungsschicht liegenden (Trittschall-) Dämmschicht; für diesen gilt

$$(2) \qquad \tan\delta_C = \frac{L_C''}{L_C'},$$

dieser ist also das Verhältnis des einachsigen Dehnverlustmoduls $L_C''$ zum einachsigen Dehnspeichermodul $L_C'$, der die Dämpfungseigenschaften bezüglich der durch das Begehen der Bodendielen verursachten Dickenschwingungen beschreibt.

Die beiden Verlustfaktoren beeinflussen in ihrem Zusammenwirken gemeinsam das Dämpfungsverhalten des Gesamtsystems und damit sowohl die Trittschalldämmung als auch das Abstrahlverhalten der Bodendielen betreffend Luftschall in den Raum.

Diese auch für den Fachmann überraschende Erkenntnis beinhaltet, dass die bisher herangezogenen, bekannten Gesetzmäßigkeiten der Trittschallminderung von Dämmstoffen bei dünnen Bodendielen auch dann nicht mehr ihre volle Gültigkeit haben, wenn die für den Trittschallschutz eingesetzten Dämmstoffe einen einachsigen Dehnverlustfaktor tan $\delta_c$ von grösser als 0,17 haben. In diesem Fall darf - entgegen dem bestehenden Vorurteil der Fachwelt für die Realisierbarkeit - zur Einhaltung von noch akzeptablen bewerteten Trittschallminderungen $\Delta L_w$ grösser 15 dB die dynamische Steifigkeit s' der Schalldämmschicht Werte oberhalb von 50 MN/m$^3$ aufweisen, vorausgesetzt die Bodendielen werden zunächst mit einer Dämpfungsschicht mit einem Biegewellen-Verlustfaktor tan $\delta_f$ > 0,08 kombiniert. Diese hohen Steifigkeiten sind aber auch mit relativ kleinen Dämmstoffdicken von lediglich einigen Millimetern zu erzielen, was insbesondere in Kombination mit einem nachträglichen Einbau von Bodendielen, z.B. im Sanierungsfall, von grosser, auch volkswirtschaftlicher Bedeutung ist.

Übersteigt der einachsige Dehnverlustfaktor

tan $\delta_c$ der Schalldämmschicht jenen marktüblicher z.B. Mineralfaser- oder Polystyroldämmstoffe, so tritt in diesem speziellen Falle die Bedeutung der im allgemeinen maßgeblichen dynamischen Steifigkeit s' der Schalldämmschicht gegenüber dem Einfluss der durch sie erzielbaren Dämpfung der Dickenschwingungen in den Hintergrund. Damit sind gleiche Ergebnisse auch mit Materialien zu erzielen, deren dynamische Steifigkeiten weit grösser sind als s' ~50 MN/m$^3$.

Das zweilagige Verbundsystem erlaubt die Optimierung des Dämpfungsverhaltens bezüglich der Schallabstrahlung in den Raum. Die Schalldämmschicht übernimmt zusätzlich zur optimierten, schwingungsdämpfenden Rolle bezüglich der schallabstrahlenden Bodendiele auch noch die "Federeigenschaften" für das schalltechnisch wirksame zweischalige System aus

• Bodendiele (als dünne Lastverteilungsplatte mit einer geringen Flächenmasse) und

• Rohdecke.

Die Eigen-Resonanzfrequenz dieses Feder-Masse-Systems wird ausser von den beiden Einzelmassen maßgeblich von der dynamischen Steifigkeit des zwischen der Lastverteilungsplatte und der Rohdecke angeordneten Materials bestimmt und sollte nach dem Stand der Technik möglichst weniger als 85 Hertz betragen. Damit kann sichergestellt werden, dass über das gekoppelte Feder-Masse-System möglichst wenig Stossanregungsenergie als lokale Erregung aus dem Begehen der Bodendielen in die Rohdecke selbst eingeleitet und in (vertikal oder horizontal) benachbarte Räume als Luftschall wieder abgestrahlt wird.

Wird das erfindungsgemässe Schallschutzsystem mit Dielenböden kombiniert, bilden diese gemeinsam eine Lastverteilungsplatte, die im Sinne der angestrebten Optimierung - und im Unterschied zu massiveren schwimmenden Estrichen - eine "echte" biegeweiche Schale darstellt. Diese bewirkt einerseits, dass das Abstrahlverhalten der Fussbodendielen in den begangenen Raum nicht nur durch die Bedämpfung der Biegeschwingungen der Dielen durch die an diese angrenzende Dämpfungsschicht des Schallschutzsystems deutlich geprägt wird, sondern insbesondere und ganz wesentlich auch durch die zusätzliche Bedämpfung der Dickenschwingungen des Gehbelagsystems über den einachsigen Dehnverlustfaktor tan $\delta_c$ der im erfindungsgemäßen Schallschutzsystem für Dielenböden eingesetzten Trittschallmaterialien beeinflusst wird.

Durch die z.B. an der Unterseite des Gehbelages angebrachte, gegebenenfalls aufgeklebte, Dämpfungsschicht aus Materialien sehr hoher Dichte wird die flächenbezogene Masse des dünnen Gehbelages - bzw. auch im Anwendungsfall einer dünnen Wandverkleidung deren Masse - so entscheidend erhöht, dass damit in Verbindung mit der geeigneten dynamischen Steifigkeit der trittschalltechnisch wirksamen Schicht des Schallschutz-Verbundsystems und in Kombination mit massiven Unterkonstruktionen (auch im Wand- bzw. Deckenbereich) eine so niedrige Resonanzfrequenz des Gesamtsystems erzielt wird, dass dieses grundsätzlich auch luftschalltechnisch wirksam oder als schallschluckender Platten-Absorber für raumakustische Zwecke einsetzbar ist.

Das erfindungsgemässe Schallschutz-Verbundsystem ist nicht nur für Bodenbeläge aus Press-Spanplatten einsetzbar, sondern prinzipiell auch auf Wand- und Deckenbeläge, sowie auf alle Fussbodenaufbauten ohne schwimmenden Estrich, insbesondere solche mit lastverteilenden Gehbelägen, anwendbar.

Die Erfindung wird anhand der beiliegenden Zeichnung beispielhaft näher erläutert. Es zeigen im einzelnen

Fig.1      das Trittschallverbesserungsmass schwimmender Estriche in Abhängigkeit von der Estrichmasse und der dynamischen Steifigkeit der Schalldämmschicht nach herrschender Fachmeinung;

Fig.2      den schematischen Schichtaufbau eines erfindungsgemässen Schallschutzsystems;

Fig.3      den schematischen Schichtaufbau des Schallschutzsystems bei Einbringung einer Dampfsperre bzw. -bremse;

Fig.4      die schematische Darstellung einer alternativen Anordnung der Schichten mit einer Integration der Bedämpfungsschicht in der Verkleidungsschicht;

Fig.5      die schematische Darstellung der Verwendung einer Luftnoppenfolie als Trittschall-Schalldämmschicht und

Fig.6a-c      in tabellarischer Form die physikalischen Daten und Auswirkungen des erfindungsgemässen Schallschutz-Verbundsystems neben physikalischen Daten für einige Systeme des Standes der Technik.

In Fig.1 ist das Trittschallverbesserungsmass $\Delta L_w$ als Funktion der flächenbezogenen Estrichmasse m' und der dynamischen Steifigkeit s' des Dämmstoffes dargestellt. Dieser Verlauf gibt die herrschende Fachmeinung wieder und bildet u.a. die Basis der gültigen Norm ÖNORM B 8115 und ist auch in der laufenden Neubearbeitung laut Vorschlag ÖNORM B 8115-4, Fassung vom 2. Mai 2001, Tabelle 16, enthalten. Die trittschalldämmende Wirkung eines schwimmenden Estrichs ist umso grösser, je geringer die dynamische Steifigkeit s' der Schalldämmschicht und je grösser die flächenbezogene Masse m' des Estrichs ist. Die durchgezogenen Kurven beziehen sich auf Estriche aus Zement und Calciumsulfat, die strichpunktierten Kurven auf Gussasphalt- und Trockenestriche (Abb. aus "Schall·Wärme·Feuchte, Grundlagen, Erfahrungen und praktische Hinweise für den Hochbau", von K. Gösele/W. Schüle, 9. Auflage, Bauverlag GmbH, Wiesbaden und Berlin, 1991, Bild 5.60).

Fig.2 zeigt den schematischen Aufbau eines erfindungsgemässen Schallschutzsystems. Auf eine Raumbegrenzungsfläche U kann das Schallschutzsystem mit einer Schichtfolge von Verkleidungsschicht V, Dämpfungsschicht D und Schalldämmschicht S aufgebracht werden. Die Dämpfungsschicht D kann lose verlegt, aber auch entweder mit der Unterseite der Verkleidungsschicht V, und/oder mit der Oberseite der Schalldämmschicht S, deren Unterseite auf dem Raumbegrenzungsfläche U aufliegt, z.B. durch Verklebung, festhaftend verbunden sein

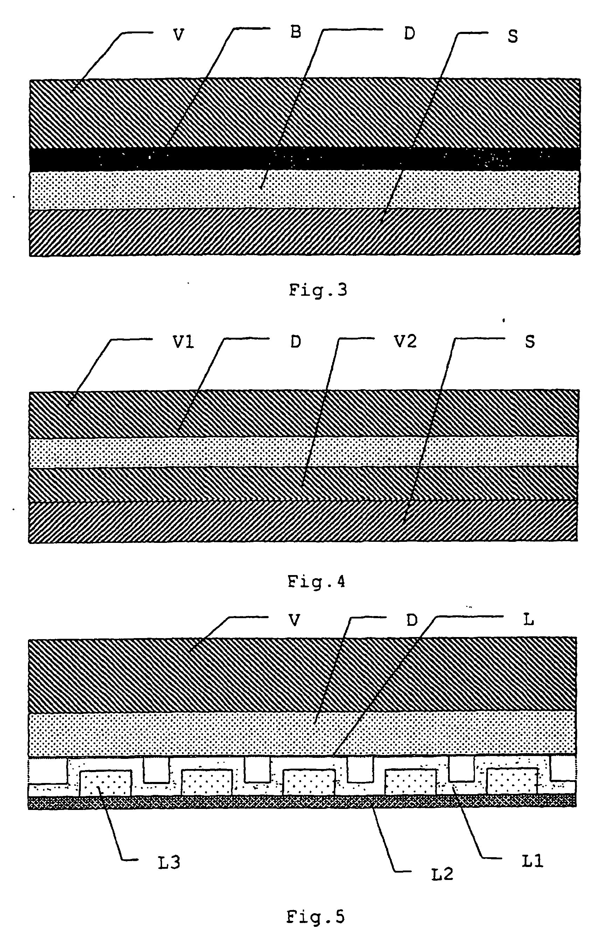

Eine mögliche Einbringung einer Dampfbremse bzw. Dampfsperre B - gegebenenfalls in Form einer Heizfolie oder zusätzlich zu einer Heizfolie - zwischen Verkleidungsschicht V und der Dämpfungsschicht D des erfindungsgemässen Schichtaufbaus zeigt Fig.3.

Eine andere mögliche Anordnung der Dämpfungsschicht D zeigt Fig.4. Die Dämpfungsschicht D kann auch als Kern der Verkleidungsschicht V ausgebildet oder, wie hier dargestellt, zwischen zwei von deren Lagen V1, V2 angeordnet sein.

Fig.5 stellt schematisch die Verwendung einer Luftnoppenfolie L als Schalldämmschicht dar. Die Luftnoppenfolie besteht aus einer tiefziehfähigen Folienbahn L1 und einer Deckfolienbahn L2 als Schalldämmschicht. Diese beiden Folienbahnen bestehen dabei ihrerseits wiederum aus einer Mehrzahl von, beispielsweise koextrudierten, Schichten, in die auch zur Verbesserung der Gasdichtigkeit Barrierewerkstoffe eingebracht werden können. Die Noppen L3 der Luftnoppenfolie L können mit einem Inertgas, z.B. Argon, oder einem Inertgas-Gemisch, z.B. Argon-Stickstoff, gefüllt sein.

Die aus Fig.2 - Fig.5 ersichtlichen Dickenverhältnisse sind nicht einschränkend zu verstehen. So kann z.B. die Verkleidungsschicht V dünner (z.B. als 5 mm dicke Hartfaserplatte oder als Laminatschicht, solange sie nur lastverteilend wirkt) oder dicker als die Dämpfungsschicht D ausgebildet sein. Wird eine relativ dünne Verkleidungsschicht V gewählt, so wird die Dämpfungsschicht D als (wesentlich dickere) Tragschicht ausgebildet, die durch die spezielle Auswahl von Zuschlagstoffen hinsichtlich zu erzielender Eigenschaften optimiert werden kann.

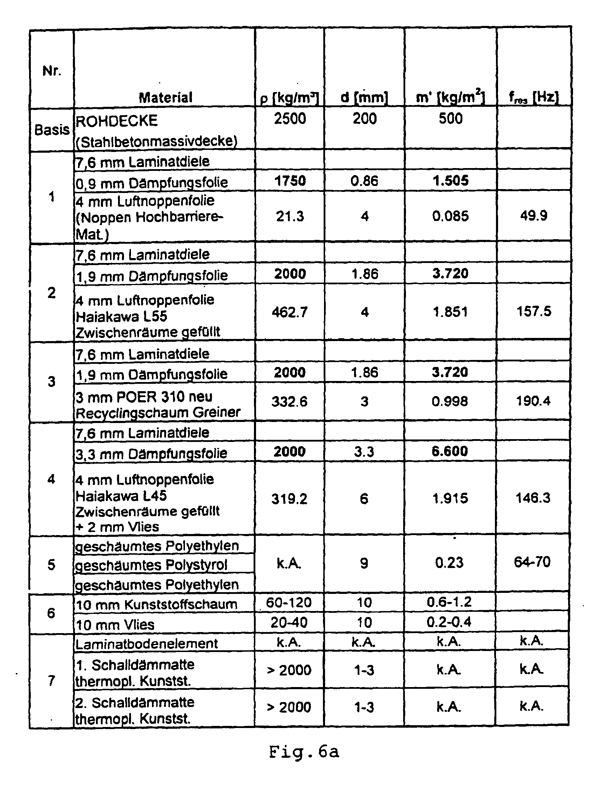

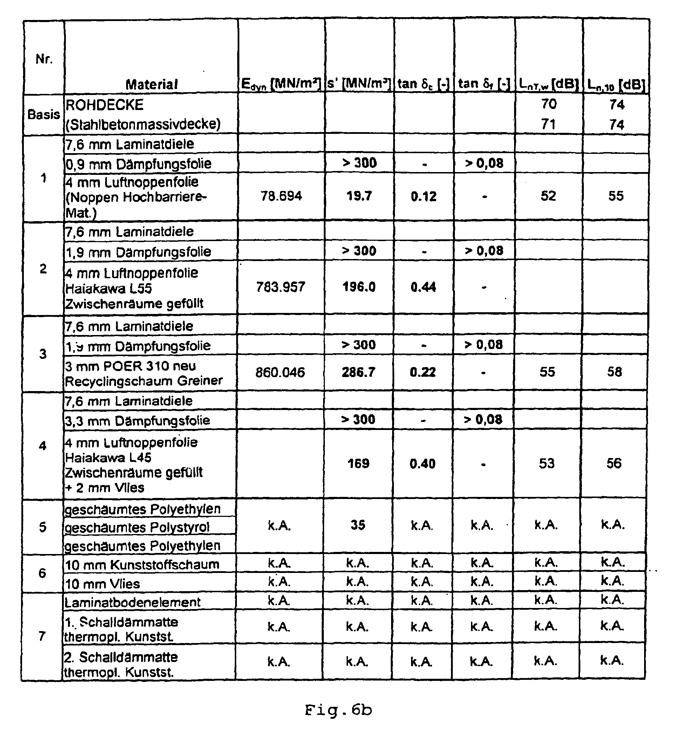

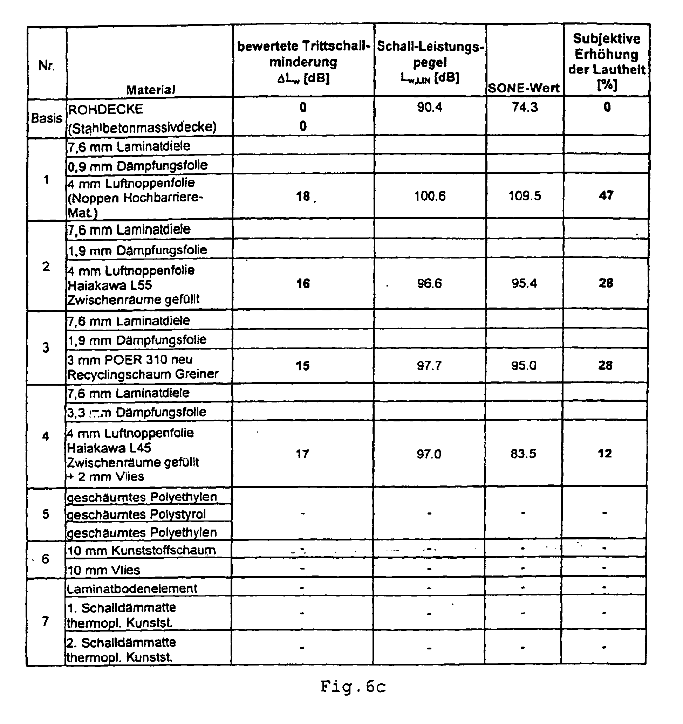

In Fig.6a-c sind Parameter und Messwerte für 4 verschiedene erfindungsgemässe Schichtkombinationen als Nr.1 bis Nr. 4 tabellarisch dargestellt. Zum Vergleich werden die physikalischen. Daten von Mehrschichtsystemen des Standes der Technik als Nr.5 (DE 197 22 513), Nr.6 (DE 196 37 142) und Nr.7 (EP 0 864 712) aufgeführt. Diese Systeme des Standes der Technik wurden nicht in die Messungen einbezogen.

Für alle erfindungsgemässen Varianten dient eine Rohdecke aus 20cm starkem Stahlbeton als Basis, und es wird jeweils eine steife, schallharte Laminatdiele aus einer hochdichten Faserplatte mit 1 mm Kunststoff-Laminat-Auflage, insgesamt 7,6 mm dick, verwendet. Die Schichtkombinationen bestehen im einzelnen aus

- der Laminatdiele, der 0,9 mm Dämpfungsfolie der Fa. TARKETT SOMMER, Luxembourg S.A. und einer 4 mm Luftnoppenfolie aus Hochbarrierematerial (Schichtkombination Nr.1);

- der Laminatdiele, einer 1,9 mm Dämpfungsfolie der Fa. TARKETT SOMMER, Luxembourg S.A. und einer 4 mm Luftnoppenfolie Haiakawa L55 mit gefüllten Zwischenräumen (Schichtkombination Nr.2);

- der Laminatdiele, einer 1,9 mm Dämpfungsfolie der Fa. TARKETT SOMMER, Luxembourg S.A. und einer 3 mm starken Schicht aus POER 310 neu Recyclingschaum der Fa. Greiner (Schichtkombination Nr.3);

- der Laminatdiele, einer 3,3 mm Dämpfungsfolie der Fa. TARKETT SOMMER, Luxembourg S.A., einer 4 mm Luftnoppenfolie Haiakawa L45 mit gefüllten Zwischenräumen und einem 2 mm Vlies (Schichtkombination Nr.4).

Die zur Vermessung der physikalischen Daten und Auswirkungen des erfindungsgemässen Schallschutz-Verbundsystems durchgeführten Laboruntersuchungen erfolgten gemäß der dafür zuständigen ÖNORM EN ISO 6721, Kunststoffe, Bestimmung dynamischmechanischer Eigenschaften, Ausgabe 1. Mai 1996, wobei der Teil 1 (Allgemeine Grundlagen) und bezüglich des Biegeverlustfaktors der Teil 3, Biegeschwingung, Resonanzkurvenverfahren, maßgeblich sind.

Dabei hat sich gezeigt, dass der messtechnisch ermittelte Zahlenwert der Kenngröße $\tan \delta_f$ des Prüfkörpers sehr stark vom gewählten Dickenverhältnis aus der Dämpfungsfolie selbst und dem grundsätzlich erforderlichen Trägermaterial abhängt. Die Breite der Prüfkörper spielt hingegen keine Rolle. Der gemessene $\tan \delta_f$ - Wert als Verhältnis aus dem Realteil und dem Imaginärteil des E-Moduls des Prüfkörpers spiegelt das Dämpfungsverhalten der geprüften Gesamtkombination wieder; sowohl im Realteil als auch im Imaginärteil steckt also die Summe der zugehörigen Einzelanteile dieser Kenngrößen aus den beiden jeweils zutreffenden Schichten des Prüfkörpers. Der Imaginärteil des Stahlstreifens als Trägermaterial ist klein und kann praktisch stets vernachlässigt werden, nicht hingegen aber der Realteil des E-Moduls des Stahlstreifens.

Die indirekte Charakterisierung des Biegeverlustfaktors des Materials der Dämpfungsschicht erfolgte unter Verwendung einer Prüfanordnung für das Verfahren B nach Prüfnorm ÖNORM EN ISO 6721-3, Ausgabe 1. Mai 1996 bei einer Temperatur von 20° Celsius sowie anhand des gemäß dieser Norm aus der "ersten Grundschwingung" ermittelten tan $\delta_f$ - Wertes eines 150 mm langen Prüfkörpers mit dem Aufbau Dämpfungsfolie + 0,5 mm Stahlblechstreifen (9 mm breit).

Aus dem Vergleich der Trittschallminderungen $\Delta L_w$ [dB] der 4 beschriebenen erfindungsgemässen Schichtkombinationen ist - in Verbindung mit den unterschiedlichen dynamischen Steifigkeiten der unerwartet grosse Einfluss von Dämpfungseffekten im Zusammenhang mit der einachsigen Stauchung/ Dehnung ("Dickenschwingung") des Schallschutzsystems abzuleiten. In dieser speziellen Funktionsweise in Verbindung mit Fussboden-Dielen tritt offensichtlich die zunächst zu erwartende Bedeutung der dynamischen Steifigkeit der Schalldämmschicht gegenüber dem Einfluss der durch sie erzielbaren Dämpfungen der Dickenschwingungen in den Hintergrund. Dabei wird eine entsprechende Trittschallminderung für spezielle Kombinationen von dynamischer Steifigkeit s' und einachsigem Dehnverlustfaktor tan $\delta_c$ der Schalldämmschicht erreicht:

o ein einachsiger Dehnverlustfaktor tan $\delta_c$ < 0,17 und eine dynamische Steifigkeit s' < 50 MN/m$^3$, vorzugsweise s' < 30 MN/m$^3$; dies gilt für die Schichtkombination Nr.1,

o ein einachsiger Dehnverlustfaktor tan $\delta_c \geq$ 0,17 und eine dynamische Steifigkeit s' $\geq$ 50 MN/m$^3$, vorzugsweise s' > 150 MN/m$^3$; dies gilt für die Schichtkombinationen Nr.2, Nr.3 und Nr.4.

Bevorzugt weist die Dämpfungsschicht D eine Dichte von mehr als 2000 kg/m$^3$, und unabhängig hiervon eine dynamische Steifigkeit s' > 100 MN/m$^3$ auf.
Die in der Dämpfungsschicht D optional enthaltenen mineralischen Füllstoffe können Kalk und Schwerspat, die hier eingesetzten Weichmacher Mineralöle sein.

Es ist möglich, zwischen der Verkleidung V und der Dämpfungsschicht D eine Dampfbremse oder Dampfsperre B in Form einer Heizfolie einzusetzen.

Die Schalldämmschicht kann eine dynamische Steifigkeit s' von mehr als 150 MN/m$^3$, und/oder Dichten zwischen 250 kg/m$^3$ und 600 kg/m$^3$, insbesondere zwischen 300 und 500 kg/m$^3$ besitzen. Die Dicke dieser Schicht beträgt vorzugsweise etwa 4 mm.
Im Fall, dass die Schalldämmfolie S als Luftnoppenfolie ausgeführt ist, kann diese wenigstens eine Zwischenlage aufweisen.

## Patentansprüche

1. Schallschutz-Verbundsystem für eine Raumbegrenzungsfläche (U), umfassend

(i) eine Boden-, Wand- oder Deckenverkleidung (V),
(ii) eine an die jeweilige Verkleidung (V) anschließende Dämpfungsschicht (D), und
(iii) eine an die Raumbegrenzungsfläche (U) anschließende Schalldämmschicht (S),

**dadurch gekennzeichnet, dass**

a) die Dämpfungsschicht (D) einen Biegeverlustfaktor tan $\delta_f \geq$ 0,08 und eine Dichte von >1600 kg/m3 aufweist <u>und</u>
b) die Schalldämmschicht (S)

b1) entweder einen einachsigen Dehnverlustfaktor tan $\delta_c$ < 0,17, eine dynamische Steifigkeit s' <50 MN/m$^3$ und eine Dichte zwischen 20 und 600 kg/m$^3$ oder
b2) einen einachsigen Dehnverlustfaktor tan $\delta_c \geq$ 0,17 und eine dynamische Steifigkeit von s' $\geq$ 50 MN/m$^3$

aufweist,
c) <u>und</u> wobei die Gesamtdicke von Dämpfungsschicht (D) und Schalldämmschicht (S) maximal 14 mm beträgt.

2. Schallschutz-Verbundsystem nach Anspruch 1,
**dadurch gekennzeichnet, dass**
die Schalldämmschicht (S) eine Dicke von 2 - 6 mm besitzt.

3. Schallschutz-Verbundsystem nach Anspruch 1 oder 2,
**dadurch gekennzeichnet, dass**
die Schalldämmschicht (S) aus recycliertem Polyurethanflocken-Verbundschaum besteht.

4. Schallschutz-Verbundsystem nach einem der vorhergehenden Ansprüche,
**dadurch gekennzeichnet, dass**
die Dämpfungsschicht (D) aus einem thermoplastischen Verbundsystem besteht.

5. Schallschutz-Verbundsystem nach Anspruch 4,
**dadurch gekennzeichnet, dass**
die Dämpfungsschicht (D) aus High-Density-Polyethylen und Ethylen-Vinylacetat sowie mineralischen Füllstoffen und Weichmachern besteht.

6. Schallschutz-Verbundsystem nach einem der vorhergehenden Ansprüche,
**dadurch gekennzeichnet, dass**
zwischen der Verkleidung (V) und der Dämpfungsschicht (D) eine Dampfbremse oder Dampfsperre (B) angeordnet ist.

7. Schallschutz-Verbundsystem nach einem der vorhergehenden Ansprüche,
**dadurch gekennzeichnet, dass**
die Schalldämmschicht (S) als Luftnoppenfolie (L) oder Mehrfach-Luftnoppenfolie ausgebildet ist.

8. Schallschutz-Verbundsystem nach Anspruch 7, **dadurch gekennzeichnet, dass** bei einer Mehrfach-Luftnoppenfolie zwei Luftnoppenfolien gegengleich derart aufeinander liegen, dass die Noppen der einen Luftnoppenfolie in die Zwischenräume zwischen den Noppen der anderen Luftnoppenfolie eingreifen.

## Claims

1. Composite soundproofing system for a room-bounding surface (U), comprising

   (i) floor, wall or ceiling panelling (V),
   (ii) a damping layer (D) adjoining the respective panelling (V), and
   (iii) a sound insulation layer (S) adjoining the room-bounding surface (U),

   **characterized in that**

   a) the damping layer (D) has a bending loss factor $\tan \delta_f \geq 0.08$ and a density of $> 1600$ kg/m$^3$ <u>and</u>
   b) the sound insulation layer (S)

   b1) either has a uniaxial expansion loss factor $\tan \delta_c < 0.17$, a dynamic rigidity s' $< 50$ MN/m$^3$ and a density of between 20 and 600 kg/m$^3$ or
   b2) has a uniaxial expansion loss factor $\tan \delta_c \geq 0.17$ and a dynamic rigidity s' $\geq 50$ MN/m$^3$,

   c) <u>and</u> where the total thickness of the damping layer (D) and sound insulation layer (S) is at most 14 mm.

2. Composite soundproofing system according to Claim 1, **characterized in that** the sound insulation layer (S) has a thickness of 2-6 mm.

3. Composite soundproofing system according to Claim 1 or 2, **characterized in that** the sound insulation layer (S) consists of recycled composite polyurethane flake foam.

4. Composite soundproofing system according to one of the preceding claims, **characterized in that** the damping layer (D) consists of a thermoplastic composite system.

5. Composite soundproofing system according to Claim 4, **characterized in that** the damping layer (D) consists of high-density polyethylene and ethylenevinyl acetate and also mineral fillers and plasticizers.

6. Composite soundproofing system according to one of the preceding claims, **characterized in that** a vapour seal or vapour barrier (B) is arranged between the panelling (V) and the damping layer (D).

7. Composite soundproofing system according to one of the preceding claims, **characterized in that** the sound insulation layer (S) is designed as a bubble film (L) or multiple bubble film.

8. Composite soundproofing system according to Claim 7, **characterized in that**, in the case of a multiple bubble film, two bubble films lie one atop the other in a complementary manner such that the bubbles of one bubble film engage in the interspaces between the bubbles of the other bubble film.

## Revendications

1. Système composite d'isolation acoustique pour une surface de délimitation d'espace (U), comprenant

   i) un revêtement de sol, de mur ou de plafond (V),
   ii) une couche d'amortissement (D) jouxtant le revêtement correspondant (V), et
   iii) une couche d'isolant acoustique (S) jouxtant la surface de délimitation d'espace (U),

   **caractérisé en ce que**

   a) la couche d'amortissement (D) présente un facteur de perte en flexion $\tan \delta_f \geq 0,08$ et une masse volumique $> 1600$ kg/m$^3$ <u>et</u>
   b) la couche d'isolation acoustique (S) présente

   b1) soit un facteur de perte en allongement monoaxial $\tan \delta_c < 0,17$, une rigidité dynamique s' $< 50$ MN/m$^3$ et une masse volumique entre 20 et 600 kg/m$^3$, soit
   b2) un facteur de perte en allongement monoaxial $\tan \delta_c > 0,17$ et une rigidité dynamique s' $> 50$ MN/m$^3$,

   c) <u>et</u> où l'épaisseur totale de la couche d'amortissement (D) et de la couche d'isolation acoustique (S) est d'un maximum de 14 mm.

2. Système composite d'isolation acoustique selon la revendication 1, **caractérisé en ce que** la couche d'isolation acoustique (S) possède une épaisseur de 2 à 6 mm.

3. Système composite d'isolation acoustique selon la revendication 1 ou 2, **caractérisé en ce que** la couche d'isolation acoustique (S) est constituée de mousse composite de flocons de polyuréthanne recyclée.

4. Système composite d'isolation acoustique selon l'une quelconque des revendications qui précèdent, **caractérisé en ce que** la couche d'amortissement (D) est constituée d'un système composite thermoplastique.

5. Système composite d'isolation acoustique selon la revendication 4, **caractérisé en ce que** la couche d'amortissement (D) est constituée de polyéthylène haute densité et d'éthylène - acétate de vinyle ainsi que de charges minérales et de plastifiants.

6. Système composite d'isolation acoustique selon l'une quelconque des revendications qui précèdent, **caractérisé en ce que**, entre le revêtement (V) et la couche d'amortissement (D), est placé un écran ou une barrière pare-vapeur (B).

7. Système composite d'isolation acoustique selon l'une quelconque des revendications qui précèdent, **caractérisé en ce que** la couche d'isolation acoustique (S) est configurée en feuille matelassée (L) ou en feuille matelassée multiple.

8. Système composite d'isolation acoustique selon la revendication 7, **caractérisé en ce que**, dans le cas d'une feuille matelassée multiple, deux feuilles matelassées sont placées face à face l'une sur l'autre, de manière que les bulles d'une feuille matelassée s'insèrent dans les espaces intermédiaires entre les bulles de l'autre feuille matelassée.

ΔL_w [dB]

Fig.1

Fig.2

V      B      D      S

Fig.3

V1      D      V2      S

Fig.4

V      D      L

L3      L2      L1

Fig.5

| Nr. | Material | $\rho$ [kg/m³] | d [mm] | m' [kg/m²] | $f_{res}$ [Hz] |
|---|---|---|---|---|---|
| Basis | ROHDECKE (Stahlbetonmassivdecke) | 2500 | 200 | 500 | |
| 1 | 7,6 mm Laminatdiele | | | | |
| | 0,9 mm Dämpfungsfolie | 1750 | 0.86 | 1.505 | |
| | 4 mm Luftnoppenfolie (Noppen Hochbarriere-Mat.) | 21.3 | 4 | 0.085 | 49.9 |
| 2 | 7,6 mm Laminatdiele | | | | |
| | 1,9 mm Dämpfungsfolie | 2000 | 1.86 | 3.720 | |
| | 4 mm Luftnoppenfolie Haiakawa L55 Zwischenräume gefüllt | 462.7 | 4 | 1.851 | 157.5 |
| 3 | 7,6 mm Laminatdiele | | | | |
| | 1,9 mm Dämpfungsfolie | 2000 | 1.86 | 3.720 | |
| | 3 mm POER 310 neu Recyclingschaum Greiner | 332.6 | 3 | 0.998 | 190.4 |
| 4 | 7,6 mm Laminatdiele | | | | |
| | 3,3 mm Dämpfungsfolie | 2000 | 3.3 | 6.600 | |
| | 4 mm Luftnoppenfolie Haiakawa L45 Zwischenräume gefüllt + 2 mm Vlies | 319.2 | 6 | 1.915 | 146.3 |
| 5 | geschäumtes Polyethylen geschäumtes Polystyrol geschäumtes Polyethylen | k.A. | 9 | 0.23 | 64-70 |
| 6 | 10 mm Kunststoffschaum | 60-120 | 10 | 0.6-1.2 | |
| | 10 mm Vlies | 20-40 | 10 | 0.2-0.4 | |
| 7 | Laminatbodenelement | k.A. | k.A. | k.A. | k.A. |
| | 1. Schalldämmatte thermopl. Kunstst. | > 2000 | 1-3 | k.A. | k.A. |
| | 2. Schalldämmatte thermopl. Kunstst. | > 2000 | 1-3 | k.A. | k.A. |

Fig. 6a

| Nr. | Material | $E_{dyn}$ [MN/m²] | s' [MN/m²] | tan $\delta_c$ [-] | tan $\delta_f$ [-] | $L_{nT,w}$ [dB] | $L_{n,10}$ [dB] |
|---|---|---|---|---|---|---|---|
| Basis | ROHDECKE (Stahlbetonmassivdecke) | | | | | 70 / 71 | 74 / 74 |
| 1 | 7,6 mm Laminatdiele | | | | | | |
| | 0,9 mm Dämpfungsfolie | | > 300 | - | > 0,08 | | |
| | 4 mm Luftnoppenfolie (Noppen Hochbarriere-Mat.) | 78.694 | 19.7 | 0.12 | - | 52 | 55 |
| 2 | 7,6 mm Laminatdiele | | | | | | |
| | 1,9 mm Dämpfungsfolie | | > 300 | - | > 0,08 | | |
| | 4 mm Luftnoppenfolie Haiakawa L55 Zwischenräume gefüllt | 783.957 | 196.0 | 0.44 | - | | |
| 3 | 7,6 mm Laminatdiele | | | | | | |
| | 1,9 mm Dämpfungsfolie | | > 300 | - | > 0,08 | | |
| | 3 mm POER 310 neu Recyclingschaum Greiner | 860.046 | 286.7 | 0.22 | - | 55 | 58 |
| 4 | 7,6 mm Laminatdiele | | | | | | |
| | 3,3 mm Dämpfungsfolie | | > 300 | - | > 0,08 | | |
| | 4 mm Luftnoppenfolie Haiakawa L45 Zwischenräume gefüllt + 2 mm Vlies | | 169 | 0.40 | - | 53 | 56 |
| 5 | geschäumtes Polyethylen / geschäumtes Polystyrol / geschäumtes Polyethylen | k.A. | 35 | k.A. | k.A. | k.A. | k.A. |
| 6 | 10 mm Kunststoffschaum | k.A. | k.A. | k.A. | k.A. | k.A. | k.A. |
| | 10 mm Vlies | k.A. | k.A. | k.A. | k.A. | k.A. | k.A. |
| 7 | Laminatbodenelement | k.A. | k.A. | k.A. | k.A. | k.A. | k.A. |
| | 1. Schalldämmatte thermopl. Kunstst. | k.A. | k.A. | k.A. | k.A. | k.A. | k.A. |
| | 2. Schalldämmatte thermopl. Kunstst. | k.A. | k.A. | k.A. | k.A. | k.A. | k.A. |

Fig.6b

| Nr. Material | bewertete Trittschall-minderung $\Delta L_w$ [dB] | Schall-Leistungs-pegel $L_{w,LIN}$ [dB] | SONE-Wert | Subjektive Erhöhung der Lautheit [%] |
|---|---|---|---|---|
| Basis ROHDECKE (Stahlbetonmassivdecke) | 0 / 0 | 90.4 | 74.3 | 0 |
| 1 — 7,6 mm Laminatdiele / 0,9 mm Dämpfungsfolie / 4 mm Luftnoppenfolie (Noppen Hochbarriere-Mat.) | 18 | 100.6 | 109.5 | 47 |
| 2 — 7,6 mm Laminatdiele / 1,9 mm Dämpfungsfolie / 4 mm Luftnoppenfolie Haiakawa L55 Zwischenräume gefüllt | 16 | 96.6 | 95.4 | 28 |
| 3 — 7,6 mm Laminatdiele / 1,9 mm Dämpfungsfolie / 3 mm POER 310 neu Recyclingschaum Greiner | 15 | 97.7 | 95.0 | 28 |
| 4 — 7,6 mm Laminatdiele / 3,3 mm Dämpfungsfolie / 4 mm Luftnoppenfolie Haiakawa L45 Zwischenräume gefüllt + 2 mm Vlies | 17 | 97.0 | 83.5 | 12 |
| 5 — geschäumtes Polyethylen / geschäumtes Polystyrol / geschäumtes Polyethylen | - | - | - | - |
| 6 — 10 mm Kunststoffschaum / 10 mm Vlies | - | - | - | - |
| 7 — Laminatbodenelement / 1. Schalldämmatte thermopl. Kunstst. / 2. Schalldämmatte thermopl. Kunstst. | - | - | - | - |

Fig. 6c

13

**IN DER BESCHREIBUNG AUFGEFÜHRTE DOKUMENTE**

**In der Beschreibung aufgeführte Patentdokumente**

- EP 0653527 A
- DE 19722513
- DE 29809767 U
- EP 1001111 A
- EP 0864712 A
- DE 19637142
- EP 1113122 A
- US 4860851 A